# EUROPÄISCHE PATENTSCHRIFT

(11) **EP 2 719 593 B1**
(45) Veröffentlichungstag und Bekanntmachung des Hinweises auf die Patenterteilung: **06.01.2016**
(21) Anmeldenummer: 13186301.1
(22) Anmeldetag: 27.09.2013
(51) Int. Cl.: B60T 8/88

(54) **Bremssystem und Verfahren zur Erzeugung einer Bremskraft**
Brake system and method for generating a braking force
Système de freinage et procédé de génération d'une force de freinage

(30) Priorität: 13.10.2012 DE 102012020322
(43) Veröffentlichungstag der Anmeldung: 16.04.2014
(73) Patentinhaber: Volkswagen Aktiengesellschaft, 38440 Wolfsburg (DE)
(72) Erfinder: Witte, Dr. Bastian, 38108 Wolfsburg (DE); Rager, Korbinian, 38104 Braunschweig (DE)

(56) Entgegenhaltungen:
- DE-A1- 10 036 286
- DE-A1-102011 084 534
- US-A1- 2002 074 854

## Beschreibung

Die Erfindung betrifft ein Bremssystem eines Fahrzeugs, insbesondere eines teil-, hoch- oder vollautomatisch fahrbaren Fahrzeugs, sowie ein Verfahren zur Erzeugung einer Bremskraft in dem Fahrzeug.

Die US 2011/0241417 A1 beschreibt eine Bremsvorrichtung, die eine Bremskraft durch Betreiben eines Motors erzeugt. Die Bremsvorrichtung umfasst einen Speicher für eine Betriebsflüssigkeit, einen Radbremszylinder für jedes einer Anzahl von Rädern, ein Bremspedal, welches durch einen Fahrzeugführer betätigt wird, sowie Mittel zur Erfassung eines Betriebszustandes des Bremspedals. Weiter umfasst die Bremsvorrichtung einen Masterzylinder und einen Bremsflüssigkeitskreislauf. Die Bremsvorrichtung umfasst weiter eine Pumpe, die in einem Fluidkanal eines ersten Systems bereitgestellt ist und die von dem Motor angetrieben wird, um einen Druck der Flüssigkeit, die vom Flüssigkeitsspeicher zum Radbremszylinder bereitgestellt wird, zu erhöhen. Weiter umfasst die Bremsvorrichtung eine Kontrolleinrichtung, die konfiguriert ist, um einen Betriebszustand der Pumpe zu kontrollieren und, wenn ein vorbestimmter Fehlerstandard der Bremskontrolle erfüllt ist, den Motor in Übereinstimmung mit Informationen zu betreiben, die von der Erfassungseinrichtung erfasst werden. Weiter ist die Kontrolleinrichtung konfiguriert, um eine fehlersichere Kontrolle auszuführen, wobei Bremskraft bereitgestellt wird, indem Bremsflüssigkeit von der Pumpe zu einer Flüssigkeitskammer des Masterzylinders entleert wird.

Die US 2011/0005874 A1 offenbart ein Bremssystem für ein Fahrzeug, welches ein Betriebsbremsmittel umfasst, welches eine Betriebsbremsfunktion bereitstellt, um das Fahrzeug zu bremsen. Weiter umfasst das Bremssystem eine Parkbremseinrichtung, welche eine Parkbremsfunktion bereitstellt, die unabhängig von der Betriebsbremseinrichtung ist. Weiter kann das Fahrzeug, wenn eine der beiden Bremseinrichtungen teilweise oder vollständig ausfällt, automatisch durch die andere Bremseinrichtung gebremst werden.

Die DE 10 2008 015 241 A1 offenbart eine Stromkreisanomalie-Ermittlungsvorrichtung, umfassend eine Energieversorgung und eine Last, die in einem elektrischen Stromkreis angeordnet ist, der mit der Energieversorgung verbunden ist. Weiter umfasst die Ermittlungsvorrichtung ein erstes Schaltbauteil, das sich zwischen der Energieversorgung und der Last befindet. Weiter umfasst die Ermittlungsvorrichtung ein zweites Schaltbauteil, das sich auf einer nachgelagerten Seite der Last befindet. Weiter umfasst die Ermittlungsvorrichtung ein Stromerfassungsmittel zum Erfassen eines Stromzustandes in dem elektrischen Stromkreis, wobei das Stromerfassungsmittel zwischen der Last und dem ersten Schaltbauteil angeordnet ist. Weiter umfasst die Ermittlungsvorrichtung ein Spannungserfassungsmittel zum Erfassen eines Spannungszustands des elektrischen Stromkreises, wobei das Spannungserfassungsmittel zwischen der Last und dem zweiten Schaltbauteil angeordnet ist. Weiter umfasst die Ermittlungsvorrichtung ein Energieversorgungsspannungs-Überwachungsmittel zum Überwachen einer Spannung der Energieversorgung und ein Anomalieermittlungsmittel zum Ermitteln einer Anomaliestelle des elektrischen Stromkreises und/oder einer Anomalieart des elektrischen Stromkreises auf einer Basis von Überwachungsergebnissen des durch das Stromerfassungsmittel erfassten Stromzustands und/oder des durch das Spannungserfassungsmittel erfassten Spannungszustands und/oder des Energieversorgungsspannungs-Überwachungsmittels.

Die DE 10 2008 001 131 A1 offenbart eine Bremssteuervorrichtung für ein Fahrzeug mit vier Radbremsvorrichtungen zum Aufbringen eines Bremsdrehmoments jeweils auf ein rechtes Vorderrad, ein linkes Vorderrad, ein rechtes Hinterrad und ein linkes Hinterrad in Antwort auf einen zu jedem der Radzylinder der jeweiligen Räder zugeführten Bremshydraulikdrucks. Weiter umfasst die Bremssteuervorrichtung eine erste Hydraulikdruckerzeugungsvorrichtung einschließlich zweier Hydraulikdruckerzeugungskammern, die jeweils einen Hydraulikdruck in Antwort auf eine Bremsbetätigung durch einen Fahrer eines Fahrzeugs erzeugen. Weiter umfasst die Bremssteuervorrichtung einen Vorderradhydraulikkreis, der eine der Hydraulikdruckerzeugungskammern mit den beiden, jeweils dem rechten Vorderrad und dem linken Vorderrad entsprechenden, Bremsvorrichtung hydraulisch verbindet, und einen Hinterradhydraulikkreis, der die andere der Hydraulikdruckerzeugungskammern mit den anderen beiden, jeweils dem rechten Hinterrad und dem linken Hinterrad entsprechenden, Radbremsvorrichtungen hydraulisch verbindet. Weiter umfasst die Bremssteuervorrichtung eine kraftbetriebene zweite Hydraulikdruckerzeugungsvorrichtung, die einen Hilfshydraulikdruck erzeugt, der zu dem durch die erste Hydraulikdruckerzeugungsvorrichtung erzeugten Hydraulikdruck sowohl in dem Vorderradhydraulikkreis als auch dem Hinterradhydraulikkreis hinzugefügt wird. Weiter umfasst die Bremssteuervorrichtung eine Erfassungseinrichtung zum Erfassen einer Bremsbetätigungsvariablen in Antwort auf die Bremsbetätigung durch den Fahrer, eine Bezugsbetragsbestimmungseinrichtung zum Bestimmen eines Hilfshydraulikdruckbezugsbetrages eines jeden Vorderrades in dem Vorderradhydraulikdruckkreis und eines Hilfshydraulikdruckbezugsbetrags eines jeden Hinterrads in dem Hinterradhydraulikkreis auf Grundlage der erfassten Bremsbetätigungsvariablen. Weiter umfasst die Bremssteuervorrichtung eine Ermittlungseinrichtung zum Ermitteln zumindest einer Zustandsgröße aus einer einen Lastzustand des Fahrzeugs angebenden Zustandsgröße, einer einen Antriebszustand des Fahrzeugs angebenden Zustandsgröße und einer eine Radschlupfneigung angebenden Zustandsgröße. Weiter umfasst die Bremssteuervorrichtung eine Sollbetragsbestimmungseinrichtung, die dazu dient, auf der Grundlage der bestimmten Beträge des Vorderrad- und des Hinterradhilfshydraulikdruckbezugsbetrags und der ermittelten Zustandsgrößen einen Hilfshydraulikdrucksollbetrag eines jeden Vorderrads in den Vorderradhydraulikkreis derart zu bestimmen, dass er gleich oder größer als der Hilfshydraulikdruckbezugsbetrag eines jeden Vorderrads ist, und einen Hilfshydraulikdrucksollbetrag eines jeden Hinterrades in dem Hinterradhydraulikkreis derart zu bestimmen, dass er gleich oder kleiner als der Hilfshydraulikdruckbezugsbetrag eines jeden Hinterrads ist. Weiter umfasst die Bremssteuervorrichtung eine Druckstelleinrichtung zum Einstellen der Hilfshydraulikdrücke sowohl in dem Vorderradhydraulikkreis als auch dem Hinterradhydraulikkreis derart, dass sie dem jeweiligen von dem Vorderrad- und dem Hinterradhilfshydraulikdrucksollbetrag entsprechen.

Die DE 100 36 286 A1 offenbart eine hydraulische Fahrzeugbremsanlage, die zum Betreiben mit Fremdenergie zwei Fremdenergiequellen mit je einem Vorratsbehälter, je einer sich aus dem Vorratsbehälter versorgenden und dafür motorisch antreibbaren Pumpe und mit je einem von der Pumpe ladbaren Druckspeicher für zwei Bremskreise aufweist. Weiter weist die Fahrzeugbremsanlage zwischen jeder Fremdenergiequelle und zugeordneten Radbremsen wenigstens erste Ventilanordnungen auf, die von einem Steuergerät steuerbar sind in Abhängigkeit von Signalen aus wenigstens einem Signalgeber, der mittels eines Bremspedals verstellbar ist, zum Einlassen von Druckmittel aus der jeweiligen Fremdenergiequelle und zum Auslassen von Druckmittel aus Radbremsen hin in den jeweils zugeordneten Vorratsbehälter. Weiter weist die Fahrzeuabremsanlaae wenigstens in einem Bremskreis eine zweite Ventilanordnung in Redundanz auf, mittels der bei Funktionsausfall der ersten Ventilanordnung den Radbremsen der ausgefallenen ersten Ventilanordnung Druckmittel zum Bremsen zuführbar ist, wobei die wenigstens eine zweite Ventilanordnung elektrisch steuerbar ausgebildet ist und wobei das Steuergerät intern derart ausgestaltet ist, dass es die erste Ventilanordnung oder redundant die zweite Ventilanordnung steuert, wobei das Steuergerät derart eingerichtet ist, dass es aus zwei in Redundanz vorgesehenen Energiequellen versorgbar ist.

Die DE 10 2011 084 534 A1 offenbart ein elektronisches Steuergerät für ein Bremssystem eines Kraftfahrzeugs, welches mindestens eine Schnittstelle zu einem Bedienelement, insbesondere einem Parkbremsbedienschalter, und mindestens zwei Ansteuerschaltungen für elektrische Aktuatoren aufweist, insbesondere elektrischer Parkbremsaktuatoren hierbei weist das elektronische Steuergerät zwei oder mehr unabhängige Recheneinheiten auf, die über einen Datenbus direkt miteinander verbunden sind. Ein mit einem vorgeschlagenen Steuergerät Erwiderung auf den erweiterten europäischen Recherchenbericht vom 10.12.2013/ Mitteilung nach Regel 69 EPÜ vom 23.04.2014

bzw. Bremssystem ausgestattetes Kraftfahrzeug benötigt keine Getriebesperre in einem Automatikgetriebe.

Bei der Auslegung von bekannten Bremssystem, z.B. den vorhergehend erläuterten Bremssystemen des Standes der Technik, wird davon ausgegangen, dass ein Fahrzeugführer bei einem Einfachfehler im Bremssystem ohne oder mit nur geringer Verzögerung eine Fahrzeugführung übernehmen kann. Der Fahrzeugführer kann im Falle eines Fehlers im Bremssystem z.B. durch Betätigung eines Bremspedals eine Bremskraft erzeugen. Somit kann eine Hilfsbremswirkung, die das Bremssystem im Fehlerfall bereitstellen muss, geringer als eine Betriebsbremswirkung sein, die im fehlerfreien Zustand des Bremssystems bereitgestellt werden kann.

Der Bereich des automatischen Fahrens rückt immer stärker in den Fokus der Automobilentwicklung. Beim automatischen Fahren ist ein Fahrzeugführer zwar körperlich vorhanden, er kann jedoch abgelenkt sein. Ist ein Fahrzeugführer abgelenkt, so kann er nur mit einer unerwünschten Verzögerung eine Steuerung, insbesondere ein Bremsen des Fahrzeuges, übernehmen.

Es stellt sich daher das technische Problem, ein Bremssystem eines Fahrzeugs, insbesondere eines teil-, hoch- oder vollautomatischen betreibbaren Fahrzeugs, und ein Verfahren zur Erzeugung einer Bremskraft in einem solchen Fahrzeug zu schaffen, welche auch im Fehlerfall, insbesondere im Fall eines Einfachfehlers, eine sichere Betriebsweise des Fahrzeuges ermöglichen, insbesondere wenn ein Fahrzeugführer verzögert eine Fahrzeugführung übernimmt.

Die Lösung des technischen Problems ergibt sich durch die Gegenstände mit den Merkmalen der Ansprüche 1 und 10. Weitere vorteilhafte Ausgestaltungen der Erfindung ergeben sich aus den Unteransprüchen.

Erwiderung auf den erweiterten europäischen Recherchenbericht vom 10.12.2013/ Mitteilung nach Regel 69 EPÜ vom 23.04.2014

Vorgeschlagen wird ein Bremssystem eines Fahrzeugs, insbesondere eines teil-, hoch- oder vollautomatisch betreibbaren Fahrzeugs.

Ein hochautomatisch betreibbares Fahrzeug bezeichnet hierbei ein Fahrzeug, bei dem eine Fahrzeugführung automatisch, also ohne Eingriff eines Fahrzeugführers, erfolgen kann. Der Fahrer ist körperlich anwesend, aber abgelenkt (z.B. liest er ein Buch). Er kann somit erst nach einiger Zeit die Fahraufgabe wieder selbst übernehmen. Hierbei kann z.B. ein Lenken und/oder ein Antreiben und/oder ein Bremsen des Fahrzeugs zeitweise automatisch erfolgen. Hierfür kann das Fahrzeug entsprechende Systeme, z.B. ein automatisches Lenksystem, ein automatisches Antriebssystem und ein automatisches Bremssystem, umfassen.

Die Bezeichnung teilautomatisch, hochautomatisch oder vollautomatisch beschreiben unterschiedliche Automatisierungsgrade einer Fahrzeugführung. Neben diesen Automatisierungsgraden können z.B. noch die Automatisierungsgrade "Driver only" und "Assistiert" existieren. In einem hochautomatisch betriebenen Fahrzeug kann z.B. eine Quer- und Längsführung des Fahrzeugs durch ein Automatisierungssystem des Fahrzeugs erfolgen, wobei ein Fahrzeugführer das Automatisierungssystem und die Fahrzeugführung nicht dauerhaft überwachen muss. Bei einem vollautomatisch betriebenen Fahrzeug übernimmt das Automatisierungssystem beispielsweise eine Quer- und Längsführung vollständig in einem definierten Anwendungsfall. Hierbei muss der Fahrzeugführer das Automatisierungssystem und die Fahrzeugführung nicht mehr überwachen. Bei einem "Driver only"-betriebenen Fahrzeug führt der Fahrzeugführer dauerhaft die Längs- und Querführung aus. Bei einem assistiertbetriebenen Fahrzeug führt der Fahrzeugführer dauerhaft entweder die Quer- oder die Längsführung aus. Die jeweils andere Fahraufgabe wird in gewissen Grenzen von dem Automatisierungssystem ausgeführt, wobei der Fahrzeugführer das Automatisierungssystem und die Fahrzeugführung dauerhaft überwachen muss. In einem teilautomatisiert-betriebenen Fahrzeug kann das Automatisierungssystem die Quer- und Längsführung übernehmen, wobei der Fahrzeugführer das Automatisierungssystem und die Fahrzeugführung dauerhaft überwachen muss.

Bei einem vollautomatischen Fahrzeug kann der Fahrzeugführer körperlich anwesend, jedoch geistig abwesend sein, beispielsweise weil er abgelenkt ist. Somit kann nicht sichergestellt sein, dass der Fahrzeugführer die Fahrzeugführung im Bedarfsfall sofort oder möglichst rasch wieder übernehmen kann. Der Fahrzeugführer kann hierdurch als mögliche Rückfallebene bei Auftreten eines Fehlers ausfallen. Dies erfordert in der Konsequenz erhöhte Redundanzen. Das vorgeschlagene Bremssystem umfasst einen ersten Bremskreis und mindestens einen weiteren Bremskreis. Der erste Bremskreis umfasst eine erste Druckerzeugungseinrichtung und der mindestens eine weitere Bremskreis umfasst eine weitere Druckerzeugungseinrichtung. Eine Druckerzeugungseinrichtung kann beispielsweise als Pumpe ausgebildet sein oder eine Pumpe umfassen. Die Druckerzeugungseinrichtung dient zum Erzeugen eines Druckes, wodurch wiederum eine Bremswirkung erzeugt wird.

Das Bremssystem ist ein hydraulisches Bremssystem, welches ein Betriebsmittel bzw. -fluid und geeignete Fluidkanäle umfasst, die die Druckerzeugungseinrichtungen mit Radbremszylindern, die jeweils ein drehbares Rad des Fahrzeugs bremsen können, fluidtechnisch verbinden. Weiter kann das Bremssystem Ventile, beispielsweise stromgesteuerte elektromechanische Ventile zur Steuerung eines Fluidstromes im Bremssystem sowie zu einer Druckverteilungssteuerung umfassen. Weiter kann das Bremssystem Niederdruckspeicher zur Aufnahme des Betriebsmittels umfassen.

Das Bremssystem umfasst eine erste Energiequelle und mindestens eine weitere Energiequelle. Die Energiequelle kann beispielsweise als Batterie, als Kondensator oder als ein anderer Energiespeicher ausgebildet sein. Hierbei kann die erste Energiequelle eine Ausgangsspannung aufweisen, die von einer Ausgangsspannung der weiteren Energiequelle verschieden ist. Beispielsweise kann die erste Energiequelle eine Ausgangsspannung von 48 V (Gleichspannung) und die weitere Energiequelle eine Ausgangsspannung von 12 V (Gleichspannung) aufweisen.

Weiter ist die erste Druckerzeugungseinrichtung aus der ersten Energiequelle mit Energie versorgbar. Hierbei kann die erste Druckerzeugungseinrichtung ausschließlich aus der ersten Energiequelle versorgbar sein. Versorgbar bedeutet hierbei, dass beim Betrieb der ersten Druckerzeugungseinrichtung Energie, beispielsweise ausschließlich, aus der ersten Energiequelle entnommen wird. Die weitere Druckerzeugungseinrichtung ist aus der weiteren Energiequelle versorgbar, beispielsweise ausschließlich versorgbar. Hierbei kann das Bremssystem derart ausgebildet sein, dass ein Energiefluss aus der ersten Energiequelle in die zweite Energiequelle oder umgekehrt ausgeschlossen ist.

Weiter ist in dem Bremssystem ein Einfachfehler in dem ersten oder dem weiteren Bremskreis detektierbar. Hierfür kann das Bremssystem beispielsweise eine Steuer- und Auswerteeinrichtung umfassen, mittels derer ein Einfachfehler detektierbar ist. Ein Einfachfehler bedeutet hierbei, dass entweder eine Funktionsfähigkeit des ersten Bremskreises, z.B. um ein vorbestimmtes Maß, beeinträchtigt oder nicht mehr gegeben ist oder eine Funktionsfähigkeit des weiteren Bremskreises, z.B. um ein vorbestimmtes Maß, beeinträchtigt oder nicht mehr gegeben ist. Bei einem Einfachfehler liegt also entweder im ersten Bremskreis eine Fehlfunktion, z.B. eine Fehlfunktion mindestens eines dem ersten Bremskreis zugeordneten Elements, oder eine Fehlfunktion im weiteren Bremskreis, z.B. eine Fehlfunktion eines dem weiteren Bremskreis zugeordneten Elements, vor. Beim Vorliegen eines solchen Einfachfehlers kann der entsprechende Bremskreis eine gewünschte, beispielsweise maximale, Bremswirkung nicht mehr erzeugen. Der Fehler kann an beliebiger Stelle eines Bremskreises oder in der dem Bremskreis zugeordneten Energieversorgung liegen.

Weiter ist, z.B. mittels der vorhergehend erwähnten Steuer- und Auswerteeinrichtung, ein fehlerhafter Bremskreis deaktivierbar und ein funktionsfähiger Bremskreis aktivierbar. Erfindungsgemäß ist einem Normalbetrieb der erste Bremskreis betreibbar, um das Fahrzeug zu bremsen. Hierbei ist der weitere Bremskreis inaktiv. Es ist jedoch auch möglich, dass im Normalbetrieb der weitere Bremskreis betreibbar ist, wobei der erste Bremskreis inaktiv ist. Das Bremssystem ist derart ausgebildet, dass von einem fehlerhaften Bremskreis auf einen funktionsfähigen Bremskreis umgeschaltet werden kann.

Weiter ist eine mittels der ersten Druckerzeugungseinrichtung bzw. mittels des ersten Bremskreises erzeugbare Bremswirkung größer als eine oder gleich einer vorbestimmten Betriebsbremswirkung. Beispielsweise kann eine mittels der ersten Druckerzeugungseinrichtung bzw. mittels des ersten Bremskreises erzeugbare maximale Bremswirkung größer als eine oder gleich einer vorbestimmten Betriebsbremswirkung sein. Eine Betriebsbremswirkung kann beispielsweise gemäß der Regelung ECE-R13H als eine vorbestimmte Bremsbeschleunigung, beispielsweise mindestens 6,43 m/s², bei einer vorbestimmten Pedalkraft, beispielsweise maximal 500 N Pedalkraft, definiert sein, wobei eine Schwelldauer einen vorbestimmten Schwellwert, beispielsweise 600 ms, nicht überschreiten darf. Eine Pedalkraft bezeichnet hierbei eine Kraft, die ein Fahrzeugführer auf ein Bremspedal des Bremssystems aufbringt. Eine Schwelldauer bezeichnet hierbei eine Zeitdauer von einem Beginn einer Betätigung des Bremspedals bis zum Erreichen der vorhergehend erläuterten Bremsbeschleunigung.

Weiter ist eine mittels der weiteren Druckerzeugungseinrichtung bzw. mittels des weiteren Bremskreises erzeugbare Bremswirkung, beispielsweise erzeugbare maximale Bremswirkung, größer als die oder gleich der vorbestimmten Betriebsbremswirkung. Somit können sowohl der erste Bremskreis als auch der weitere Bremskreis jeweils eine Bremswirkung erzeugen, die größer als die oder gleich der gewünschten Betriebsbremswirkung ist. Dies unterscheidet das vorgeschlagene Bremssystem von konventionellen Bremssystemen, bei denen im Falle eines Einfachfehlers das Bremssystem nur eine Hilfsbremswirkung erzeugt werden kann, die kleiner als die erläuterte Betriebsbremswirkung ist. Bei konventionellen Bremssystemen wird davon ausgegangen, dass ein Fahrzeugführer nach Eintritt eines Einfachfehlers eine Fahrzeugführung sofort oder mit einer minimalen Verzögerung übernimmt und, zusätzlich zur Hilfsbremswirkung, eine weitere Bremswirkung, z.B. eine Muskelkraftbremswirkung, beispielsweise durch Betätigung des Bremspedals, erzeugt.

Beim zumindest teilweise automatischen Betrieb des Fahrzeugs ist der Fahrzeugführer zwar körperlich vorhanden, jedoch kann er derart abgelenkt sein, dass er bei Eintritt eines Einfachfehlers die Fahrzeugführung nicht sofort, beispielsweise erst nach einer vorbestimmten Zeitdauer, beispielsweise nach 30 s, übernimmt. In diesem Fall ist es wünschenswert, dass ein Bremssystem beim Eintritt eines Einfachfehlers weiterhin in der Lage ist, mindestens die gewünschte Betriebsbremswirkung zu erzeugen und nicht nur eine Hilfsbremswirkung.

Das vorgeschlagene Bremssystem, in welchem der erste Bremskreis und der weitere Bremskreis jeweils mindestens die Betriebsbremswirkung erzeugen können, ermöglicht in vorteilhafter Weise, dass auch bei Eintritt eines Einfachfehlers in einem der Bremskreise immer noch die Betriebsbremswirkung erreicht werden kann. Somit erfolgt keine Verringerung der erzeugbaren Bremswirkung. Hierdurch kann in vorteilhafter Weise eine gewünschte Betriebsbremswirkung auch gewährleistet werden, nachdem ein Einfachfehler in einem der Bremskreise aufgetreten ist, ein Fahrzeugführer die Fahrzeugführung jedoch noch nicht übernommen hat. Somit ermöglicht das vorgeschlagene Bremssystem, dass bei einem intakten Bremssystem mindestens die Betriebsbremswirkung erzeugt werden kann. Bei einem Einfachfehler kann ebenfalls mindestens die Betriebsbremswirkung erzeugt werden. In diesem Fall kann auch eine z.B. akustische und/oder optische und/oder haptische Warnung eines Fahrzeugführers sowie eine Aufforderung zur Übernahme der Fahrzeugführung erfolgen. Bei einem Doppelfehler, also bei einer Fehlfunktion sowohl des ersten als auch des weiteren Bremskreises kann mindestens eine Hilfsbremswirkung erzeugt werden. Auch in diesem Fall kann eine Warnung des Fahrzeugführers und eine dringende Aufforderung zur Übernahme erfolgen.

Das vorgeschlagene Bremssystem ist somit auch im Einfachfehlerfall betriebsbereit ("fail-operational").

Das vorgeschlagene Bremssystem kann weiter in zwei Betriebsarten betrieben werden. In einer ersten Betriebsart wird die Fahrzeugführung vom Fahrzeugführer ausgeführt. Hierbei kann das Bremssystem als so genannte Hilfskraftbremse arbeiten, wobei eine Bremswirkung, z.B. ein Bremsdruck, aus einer Muskelkraft des Fahrzeugführers und einer Kraft eines Bremskraftverstärkers erzeugt wird. In einer weiteren Betriebsart wird eine Fahrzeugführung automatisch durchgeführt (automatisches Fahren). Hierbei arbeitet das Bremssystems als so genannte Fremdkraftbremse, wobei eine Bremswirkung, z.B. ein Bremsdruck, ausschließlich aus einer Maschinenkraft erzeugt wird.

In einer weiteren Ausführungsform umfasst der erste Bremskreis weiterhin eine erste Auswerte- und Steuereinrichtung und mindestens einen dem ersten Bremskreis zugeordneten Sensor. Ein dem Bremskreis zugeordneter Sensor bezeichnet hierbei einen Sensor oder eine Erfassungseinrichtung, deren Ausgangssignal zur Steuerung oder Regelung einer von dem ersten Bremskreis erzeugten Bremswirkung genutzt wird. Hierbei kann die erste Auswerte- und Steuereinrichtung als entsprechende Steuer- oder Regeleinrichtung ausgebildet sein. Insbesondere kann die erste Auswerte- und Steuereinrichtung daten- oder signaltechnisch mit dem dem ersten Bremskreis zugeordneten Sensor verbunden sein. Selbstverständlich kann der erste Bremskreis auch weitere dem ersten Bremskreis zugeordnete Sensoren umfassen. Auch kann der erste Bremskreis einen Sensor oder mehrere Sensoren umfassen, der/die ausschließlich dem ersten Bremskreis zugeordnet ist/sind. Hierbei wird das Ausgangssignal des Sensors ausschließlich zur Steuerung oder Regelung der vom ersten Bremskreis erzeugten Bremswirkung und somit nicht zur Steuerung bzw. Regelung z.B. der vom weiteren Bremskreis erzeugten Bremswirkung genutzt.

Weiter umfasst der mindestens eine weitere Bremskreis weiterhin eine weitere Auswerte- und Steuereinrichtung und mindestens einen dem weiteren Bremskreis, z.B. ausschließlich, zugeordneten Sensor.

Mittels der ersten Auswerte- und Steuereinrichtung ist eine Erzeugung der Bremswirkung abhängig von einem Ausgangssignal des mindestens einen dem ersten Bremskreis zugeordneten Sensors und unabhängig von einem Ausgangssignal des mindestens einen dem weiteren Bremskreis zugeordneten Sensors steuerbar. Somit wird/werden also das Ausgangssignal/die Ausgangssignale des/der dem weiteren Bremskreis zugeordneten Sensors/Sensoren nicht zur Steuerung bzw. Regelung der Bremswirkung des ersten Bremskreises verwendet.

Entsprechend ist mittels der weiteren Auswerte- und Steuereinrichtung eine Erzeugung der Bremswirkung abhängig von einem Ausgangssignal des mindestens einen dem weiteren Bremskreis zugeordneten Sensors und unabhängig von einem Ausgangssignal des mindestens einen dem ersten Bremskreis zugeordneten Sensors steuerbar.

Die erste Steuer- und Auswerteeinrichtung und der mindestens eine dem ersten Bremskreis zugeordnete Sensor ist hierbei aus der ersten Energiequelle versorgbar. Die weitere Steuer- und Auswerteeinrichtung und der mindestens eine dem weiteren Bremskreis zugeordnete Sensor ist aus der weiteren Energiequelle versorgbar. Hierbei kann die Energieversorgung des ersten Bremskreises, beispielsweise ein zur Energieversorgung des ersten Bremskreises dienender erster Stromkreis, energietechnisch oder elektrisch getrennt von der Energieversorgung des weiteren Bremskreises, beispielsweise von einem zur Energieversorgung des weiteren Bremskreises dienenden weiteren Stromkreis, ausgebildet sein. Hierdurch wird verhindert, dass elektrische Energie vom ersten Bremskreis in den weiteren Bremskreis und umgekehrt fließt.

Weiter können die erste und die weitere Auswerte- und Steuereinrichtung signal- oder datentechnisch verbunden sein.

Hierdurch ergibt sich in vorteilhafter Weise ein Bremssystem, welches auch in Bezug auf eine Energieversorgung aller den einzelnen Bremskreisen zugeordneten Elemente mehrkreisig, beispielsweise zweikreisig, ausgebildet ist. Dies ermöglicht ein einfach zu betreibendes Bremssystem, da beispielsweise ein mit Energie versorgter, dem ersten Bremskreis zugeordneter Sensor bei einer energetisch unversorgten ersten Steuer- und Auswerteeinrichtung keine sinnvolle technische Funktion mehr ausüben kann.

Ein Datenaustausch zwischen den Auswerte- und Steuereinrichtungen, z.B. über einen Datenbus, z.B. einen CAN-Bus oder Flexray-Bus, kann hierbei sinnvoll zur Detektion eines Einfachfehlers in dem jeweils anderen Bremskreis als auch zu einer gegenseitigen Überwachung sein.

Hierbei bezeichnen Elemente, die einem Bremskreis zugeordnet sind, Elemente, die zur Steuerung bzw. Regelung der von dem entsprechenden Bremskreis erzeugten Bremswirkung notwendig, jedoch zur Steuerung bzw. Regelung der Bremswirkung des weiteren Bremskreises nicht notwendig sind. Entsprechend können Elemente vorgesehen sein, die mehreren Bremskreisen zugeordnet sind. Diese Elemente bezeichnen Elemente, die zur Erzeugung der Bremswirkungen in einigen oder mehreren Bremskreise notwendig sind. Beispielsweise können Sensoren vorgesehen sein, deren Ausgangssignale sowohl zur Steuerung bzw. Regelung der Bremswirkung des ersten Bremskreises als auch des weiteren Bremskreises genutzt werden. Derartige Elemente, beispielsweise Sensoren, können derart ausgebildet sein, dass sie in einem gemeinsamen Gehäuse zwei Sensorelemente aufweisen, von denen ein erstes Sensorelement von der ersten Energiequelle und das zweite Sensorelement von der zweiten Energiequelle mit elektrischer Energie versorgt wird. Weiterhin kann das erste Sensorelement mit der ersten Steuer- und Auswerteeinrichtung des ersten Bremskreises und das zweite Sensorelement mit der weiteren Steuer- und Auswerteeinrichtung des weiteren Bremskreises daten- oder signaltechnisch verbunden sein.

In einer weiteren Ausführungsform ist die erste Druckerzeugungseinrichtung als aktiver Bremskraftverstärker ausgebildet. Ein aktiver Bremskraftverstärker kann z.B. als aktiver Vakuum-Bremskraftverstärker ausgebildet sein, wobei eine Bremskraft in Abhängigkeit einer Druckdifferenz eines Vakuums zu einem Umgebungsdruck erzeugt wird. Alternativ kann der aktive Bremskraftverstärker als hydraulischer Bremskraftverstärker ausgebildet sein, wobei eine Krafterzeugung mittels eines geeigneten hydraulischen Betriebsmittels, z.B. Betriebsfluids, erzeugt wird. Bevorzugt kann ein aktiver Bremskraftverstärker als elektromechanischer Bremskraftverstärker ausgebildet sein, wobei eine Krafterzeugung z.B. durch einen Elektromotor, beispielsweise ein Servomotor, und ein entsprechendes Getriebe, beispielsweise ein rotatorisch-translatorisches Getriebe, erzeugt wird. Weiter alternativ kann der aktive Bremskraftverstärker auch als hydraulisches oder elektromechanisches Brake-by-Wire-System ausgebildet sein.

Weiter kann die erste Druckerzeugungseinrichtung alternativ als Pumpeinrichtung oder Pumpe eines ersten Schlupfregelsystems ausgebildet sein oder diese umfassen. In diesem Fall kann die erste Druckerzeugungseinrichtung auch einen Motor zum Antrieb der Pumpeinrichtung umfassen. Bevorzugt kann die Drehzahl des Motors regelbar sein. Hierbei bezeichnet eine Pumpeinrichtung eine Druckerzeugungseinrichtung, die neben dem Motor je Bremskreis einen oder mehrere Pumpenelemente haben kann. Ein Schlupfregelsystem kann auch als Antiblockiersystem (ABS) dienen.

Hierdurch ergibt sich in vorteilhafter Weise eine Ausbildung der ersten Druckerzeugungseinrichtung mit bereits vorhandenen und bekannten Vorrichtungen. Es ist möglich, dass je nach Art des Einfachfehlers im ersten Bremskreis keine vollständige Deaktivierung des ersten Bremskreises erfolgt, sondern eine Degradierung einer Funktion zur Erzeugung der Bremswirkung erfolgt. Liegt z.B. ein Einfachfehler vor, der nicht dazu führt, dass eine maximal erzeugbare Bremswirkung des ersten Bremskreises kleiner als die vorhergehend erläuterte Betriebsbremswirkung ist, so kann der erste Bremskreis weiter aktiviert bleiben, jedoch kann die erzeugte Bremskraft oder Wirkung im Vergleich zu einem voll funktionsfähigen ersten Bremskreis reduziert sein.

In einer weiteren Ausführungsform ist die weitere Druckerzeugungseinrichtung ebenfalls als Pumpeinrichtung oder umfasst diese eines weiteren Schlupfregelsystems ausgebildet oder umfasst diese. Im fehlerfreien Fall können die Pumpeinrichtungen beider Bremskreise parallel arbeiten, wodurch in vorteilhafter Weise eine hohe Druckdynamik gewährleistet wird. Auch können die Pumpeinrichtungen derart angesteuert und/oder verschaltet werden, dass Druckänderungen nicht zeitgleich, sondern um einen vorbestimmten zeitlichen Versatz versetzt erfolgen. Hierdurch ergibt sich in vorteilhafter Weise ein gleichmäßiger und harmonischer Druckverlauf in beiden Bremskreisen.

In einer weiteren Ausführungsform umfasst entweder der erste Bremskreis oder der weitere Bremskreis zusätzlich mindestens eine elektromechanische Bremseinrichtung, insbesondere eine elektrische Parkbremse. Die elektromechanische Bremseinrichtung ist einem drehbaren Rad des Fahrzeugs zugeordnet. Dies bedeutet, dass mittels der elektromechanischen Bremseinrichtung dieses drehbare Rad des Fahrzeuges bremsbar ist. Weiter ist die elektromechanische Bremseinrichtung aktivierbar, falls der entsprechende Bremskreis, also der die elektromechanische Bremseinrichtung umfassende Bremskreis, aktiviert wird. Umfasst z.B. der erste Bremskreis die mindestens eine elektromechanische Bremseinrichtung, so kann diese aktiviert werden, wenn der erste Bremskreis aktiviert wird. Somit umfasst entweder der erste oder der weitere Bremskreis zusätzlich zu der Druckerzeugungseinrichtung eine zusätzliche Bremseinrichtung. Somit kann ein Teil der drehbaren Räder mittels der Druckerzeugungseinrichtung und den mit dieser fluidtechnisch verbundenen Radbremszylindern und ein weiterer Teil der Räder mittels der elektromechanischen Bremseinrichtung oder mehrerer elektromechanischer Bremseinrichtungen gebremst werden. Hierdurch ergibt sich in vorteilhafter Weise, insbesondere im Falle eines Einfachfehlers im anderen Bremskreis, eine Aufteilung der zu erzeugenden Bremswirkung auf die Druckerzeugungseinrichtung und die elektromechanische Bremseinrichtung, wodurch diese in Bezug auf eine erzeugbare Bremswirkung kleiner dimensioniert werden können.

Weiter kann in einer solchen Ausführungsform durch eine Vorsteuerung der Druckerzeugungseinrichtung und der elektromechanischen Bremseinrichtung eine vorbestimmte Bremskraftverteilung im entsprechenden Bremskreis eingestellt werden, falls die verschiedenen elektromechanischen Bremseinrichtungen verschiedenen Rädern zugeordnet sind. Somit ist es z.B. möglich, dass eine vorbestimmte Bremskraftverteilung zwischen hydraulisch gebremsten Rädern einer Vorderachse und elektromechanisch gebremsten Rädern einer Hinterachse des Fahrzeuges eingestellt wird. Somit kann in einem solchen Fall eine Betriebssicherheit des Fahrzeugs beim Bremsen gewährleistet werden. Insbesondere kann ein Überbremsen einer Hinterachse unterbunden werden. Selbstverständlich ist auch vorstellbar, dass eine maximale Bremswirkung der elektromechanischen Bremsen und/oder der hydraulischen Bremsen durch eine Softwareüberwachung limitiert wird.

In einer weiteren Ausführungsform umfasst das Bremssystem mindestens ein elektromechanisches Ventil, z.B. ein elektromechanisches Einlassventil für einen Radbremszylinder, der einem drehbaren Rad des Fahrzeuges zugeordnet ist. Das elektromechanische Einlassventil kann hierbei einem Bremskreis zugeordnet sein und kann somit aus der entsprechenden Energiequelle des jeweiligen Bremskreises versorgt werden. Ist die elektromechanische Bremseinrichtung einem bestimmten Bremskreis zugeordnet, so kann das elektromechanische Einlassventil einem der weiteren Bremskreise zugeordnet sein.

Das elektromechanische Einlassventil ist hierbei dem drehbaren Rad zugeordnet, dem auch die mindestens eine elektromechanische Bremseinrichtung zugeordnet ist. Somit steuert das elektromechanische Einlassventil einen Fluidstrom in den Radbremszylinder, der das drehbare Rad bremst, welches auch durch die elektromechanische Bremseinrichtung bremsbar ist. Hierbei ist das elektromechanische Einlassventil ein stromlos geschlossenes Einlassventil. Bei einem fehlerfreien Bremskreis kann das elektromechanische Einlassventil unbestromt oder bestromt geschaltet werden. Somit kann ein Fluidstrom in den Radbremszylinder durch das elektromechanische Ventil gesteuert werden. Im Fehlerfall, beispielsweise bei Auftreten eines Einfachfehlers in dem Bremskreis, der das elektromechanische Ventil umfasst, wird das elektromechanische Einlassventil stromlos geschaltet und somit geschlossen. Somit kann nach Auftreten des Einfachfehlers kein hydraulisches Bremsen des Rades mehr erfolgen. Vielmehr ist nunmehr ausschließlich ein elektromechanisches Bremsen mittels der vorhergehend erläuterten elektromechanischen Bremseinrichtung möglich, die einem anderen Bremskreis zugeordnet ist.

Das elektromechanische Einlassventil kann ausschließlich entweder dem ersten oder dem weiteren Bremskreis zugeordnet sein. Durch die Ausbildung als stromlos geschlossenes elektromechanisches Einlassventil kann in vorteilhafter Weise erreicht werden, dass im Fehlerfall kein z.B. fehlerhaftes oder degradiertes hydraulisches Bremsen des drehbaren Rades, sondern ein elektromechanisches Bremsen erfolgt. Dies ist insbesondere auch dann der Fall, wenn eine Energieversorgung des Bremskreises, dem das elektromechanische Einlassventil zugeordnet ist, ausfällt.

In einer weiteren Ausführungsform ist mindestens ein Sensor und/oder mindestens ein Aktor, der sowohl dem ersten als auch dem weiteren Bremskreis zugeordnet ist, teilredundant aufgebaut. Teilredundant bedeutet hierbei, dass der mindestens eine Sensor und/oder Aktor mechanisch einfach, elektrisch jedoch doppelt ausgebildet ist. Der mindestens eine Sensor und/oder Aktor kann hierbei zwei Kanäle für ein elektrisches Ausgangssignal des Sensors bzw. ein elektrisches Eingangssignal des Aktors aufweisen, wobei ein erster Kanal daten- oder signaltechnisch mit der ersten Steuer- und Auswerteeinrichtung und der weitere Kanal daten- oder signaltechnisch mit der weiteren Steuer- und Auswerteeinrichtung verbunden ist. Auch kann der Sensor zwei voneinander unabhängige Sensorelemente umfassen, die in einem gemeinsamen Gehäuse angeordnet sind, wobei ein erstes Sensorelement daten- oder signaltechnisch mit der ersten Steuer- und Auswerteeinrichtung und ein zweites Sensorelement daten- oder signaltechnisch mit der weiteren Steuer- und Auswerteeinrichtung verbunden ist. Entsprechend kann ein Aktor zwei voneinander unabhängige Aktorelemente umfassen, die in einem gemeinsamen Gehäuse angeordnet sind. Somit kann sowohl die erste als auch die weitere Steuer- und Auswerteeinrichtung die Bremswirkungen des entsprechenden Bremskreises in Abhängigkeit des Ausgangssignals des Sensors steuern bzw. regeln. Der Begriff Aktor umfasst hierbei z.B. die vorhergehend erwähnten Druckerzeugungseinrichtungen, die elektromechanischen Ventile, die elektromechanischen Bremseinrichtungen und die weiteren Aktoren des Bremssystems.

Hierdurch ergibt sich in vorteilhafter Weise eine Redundanz der Sensorsignale wobei nur ein Sensor oder Sensorgehäuse mechanisch verbaut werden muss.

In einer weiteren Ausführungsform umfasst das Bremssystem eine Einrichtung zur Erzeugung einer Pedalgegenkraft. Diese Einrichtung kann auch als Pedalsimulator bezeichnet werden. Die Einrichtung zur Erzeugung einer Pedalgegenkraft erzeugt hierbei einen, einem Betätigungsdruck des Fahrzeugsführers entgegenwirkenden, Druck, durch den dem Fahrzeugführer haptisch eine Stärke der von ihm durch die Pedalbetätigung eingestellten Bremswirkung vermittelt wird. Dies ist insbesondere bei Elektro- oder Hybridfahrzeugen vorteilhaft, bei denen ein Teil einer zu erzeugenden Bremswirkung durch einen Rekuperationsbetrieb erzeugt werden kann. In diesem Fall kann eine zu erzeugende Bremswirkung des vorgeschlagenen Bremssystems, also beispielsweise des ersten oder des weiteren Bremskreises, reduziert sein, da sich die gewünschte Bremswirkung durch einen vom ersten oder weiteren Bremskreis erzeugten Anteil sowie einen Anteil des Rekuperationsbetriebes ergibt. Um den Fahrzeugführer trotzdem haptisch eine Höhe der vollständigen Bremswirkung zu vermitteln, kann die Einrichtung zur Erzeugung einer Pedalgegenkraft eine entsprechende Gegenkraft erzeugen.

In einer weiteren Ausführungsform umfasst das Bremssystem mindestens einen Niederdruckspeicher. Der Niederdruckspeicher ist hierbei derart dimensioniert, dass zusätzlich zur Aufnahme eines Betriebsmittels, z.B. einer Bremsflüssigkeit, bei einem Druckabbau in einem oder mehreren Radbremszylindern auch eine Aufnahme von Betriebsmitteln bei einem rekuperativen Bremsen durch den Niederdruckspeicher möglich ist. Insbesondere kann ein Volumen des vorgeschlagenen Niederdruckspeichers mindestens doppelt so groß wie ein Niederdruckspeicher in existierenden, konventionellen hydraulischen Bremssystemen sein. Beim rekuperativen Bremsen, welches im Rekuperationsbetrieb des Elektro- oder Hybridfahrzeuges erfolgt, wird, wie vorhergehend erläutert, ein Anteil der resultierenden Bremswirkung durch den Rekuperationsbetrieb erzeugt. Hierdurch kann in vorteilhafter Weise ein Anteil der hydraulischen Bremswirkung reduziert werden. Dies kann z.B. durch einen Druckabbau in einem oder mehreren Radbremszylindern erfolgen. Eine aufgrund des Druckabbaus aus den Radbremszylindern austretende Bremsflüssigkeit wird dann in dem vergrößerten Niederdruckspeicher gespeichert.

Weiter vorgeschlagen wird ein Verfahren zur Erzeugung einer Bremskraft in einem Fahrzeug, insbesondere in einem teil-, hoch- oder vollautomatisch betreibbaren Fahrzeugs. Im Normalbetrieb wird eine erste Druckerzeugungseinrichtung eines ersten Bremskreises, die aus einer ersten Energiequelle versorgt wird, derart angesteuert, dass eine gewünschte Bremswirkung, z.B. Bremskraft, erzeugt wird. Weiter wird eine Funktionsfähigkeit des ersten Bremskreises überwacht, wobei im Falle eines Einfachfehlers im ersten Bremskreis mindestens eine weitere Druckerzeugungseinrichtung eines weiteren Bremskreises, die aus einer weiteren Energiequelle versorgt wird, derart angesteuert wird, dass eine Bremswirkung erzeugt wird. Selbstverständlich kann auch im Normalbetrieb die weitere Druckerzeugungseinrichtung und im Falle eines Einfachfehlers im weiteren Bremskreis die erste Druckerzeugungseinrichtung angesteuert werden.

Weiter ist im Falle eines Einfachfehlers im ersten bzw. im weiteren Bremskreis die erzeugte oder erzeugbare Bremswirkung in allen fahrdynamischen Zuständen, insbesondere auch bei einer Voll- oder Gefahrbremsung, gleich der oder größer als die gewünschte Bremswirkung.

Auch ist möglich, dass im Falle eines Einfachfehlers zusätzlich zur Druckerzeugungseinrichtung des jeweils fehlerfreien Bremskreises mindestens eine weitere Bremseinrichtung, z.B. eine elektromechanische Bremseinrichtung, des jeweils fehlerfreien Bremskreises aktiviert wird.

Hierdurch ergibt sich, dass auch im Falle eines auftretenden Einfachfehlers eine ausreichend hohe Bremswirkung mit mindestens einer vorbestimmten Betriebsbremswirkung erzeugbar ist und keine plötzliche Reduktion der Bremswirkung, z.B. von einer gewünschten Betriebsbremswirkung auf eine Hilfsbremswirkung, erfolgt. Dies wiederum ermöglicht in vorteilhafter Weise einen teil-, hoch- oder vollautomatischen Betrieb des Fahrzeuges, wobei auch beim Auftreten eines Einfachfehlers in einem Bremskreis ein Fahrzeugführer nicht sofort oder in einer vorbestimmten Zeit die Fahrzeugführung, insbesondere das Betätigen einer Bremse, übernehmen muss. Somit wird eine Betriebssicherheit des Fahrzeugs, insbesondere eines automatisch fahrenden Fahrzeugs, verbessert.

Die Erfindung wird anhand dreier Ausführungsbeispiele näher erläutert. Die Fig. zeigen:
- Fig. 1: ein schematisches Blockschaltbild eines Bremssystems in einer ersten Ausführungsform,
- Fig. 2: ein schematisches Blockschaltbild eines Bremssystems in einer zweiten Ausführungsform und
- Fig. 3: ein schematisches Blockschaltbild eines Bremssystems in einer dritten Ausführungsform.

Nachfolgend bezeichnen gleiche Bezugszeichen Elemente mit gleichen oder ähnlichen technischen Merkmalen.

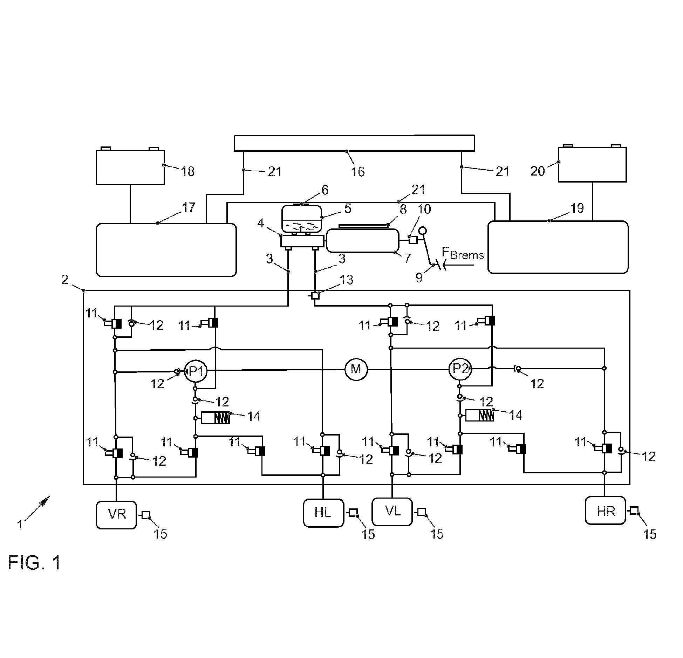

In Fig. 1 ist ein schematisches Blockschaltbild eines erfindungsgemäßen Bremssystems 1 dargestellt. Das Bremssystem 1 umfasst einen ersten Bremskreis und einen zweiten Bremskreis. Weiter umfasst das Bremssystem 1 eine Anordnung 2 von Bremsleitungen 3, die einen Hauptbremszylinder 4 mit nicht dargestellten Radbremszylindern eines rechten Vorderrades VR, eines linken Hinterrades HL, eines linken Vorderrades VL und eines rechten Hinterrades HR fluidtechnisch verbinden. Weiter umfasst das Bremssystem 1 einen Ausgleichsbehälter 5 für Bremsflüssigkeit und einen Füllstandssensor 6 zur Erfassung eines Füllstandes der Bremsflüssigkeit im Ausgleichsbehälter 5. Weiter umfasst das Bremssystem 1 einen elektrischen Bremskraftverstärker 7 sowie einen Rotorwinkelsensor 8 zur Erfassung eines Rotorwinkels eines nicht dargestellten Motors des elektrischen Bremskraftverstärkers 7. Das Bremssystem 1 umfasst weiterhin ein Bremspedal 9 und einen Kraftsensor 10 zur Erfassung einer von einem nicht dargestellten Fahrzeugführer auf das Bremspedal 9 aufgebrachten Pedalkraft F_{brems}. Weiter umfasst das Bremssystem 1 in der Anordnung 2 elektromechanische Ventile 11. Hierbei ist dargestellt, dass zu einigen der elektromechanischen Ventile 11 jeweils ein Rückschlagventil 12 fluidtechnisch parallel geschaltet ist. Weiter umfasst das Bremssystem 1 in der Anordnung 2 einen Drucksensor 13 und Niederdruckspeicher 14. Weiter dargestellt sind Raddrehzahlsensoren 15 zur Erfassung einer Drehzahl der drehbaren Räder VR, HL, VL, HR. Der Einfachheit halber zusammengefasst dargestellt sind Sensoren 16 zur Erfassung von fahrdynamischen Größen, z.B. zur Erfassung eines Gierwinkels, einer Querbeschleunigung und eines Lenkwinkeleinschlages.

Der erste Bremskreis des Bremssystems 1 umfasst eine erste Steuer- und Auswerteeinrichtung 17 und eine erste Batterie 18. Der zweite Bremskreis des Bremssystems 1 umfasst eine zweite Steuer- und Auswerteeinrichtung 19 und eine zweite Batterie 20. Die erste Steuer- und Auswerteeinrichtung 17 ist über einen CAN-Bus 21 mit der zweiten Steuer- und Auswerteeinrichtung 19 verbunden. Ebenfalls sind die Sensoren 16 über den CAN-Bus 21 mit den Steuer- und Auswerteeinrichtungen 17, 19 verbunden. Hierbei stellen die Sensoren 16 Sensoren da, die sowohl dem ersten als auch dem zweiten Bremskreis zugeordnet sind. Der Rotorwinkelsensor 8 und der Kraftsensor 10 stellen Sensoren dar, die dem ersten Bremskreis, nicht aber dem zweiten Bremskreis, zugeordnet sind. Hierbei können der Rotorwinkelsensor 8 und der Kraftsensor 10 durch die erste Batterie 18 mit elektrischer Energie versorgt werden. Der Füllstandssensor 6 kann z.B. direkt mit einer nicht dargestellten Anzeige im Kombiinstrument verbunden sein.

Weiter umfasst das Bremssystem 1 eine erste Pumpe P1 und eine zweite Pumpe P2, die gemeinsam von einem Servomotor M angetrieben werden. Der Servomotor M ist hierbei ein Servomotor mit regelbarer Drehzahl. Die erste Pumpe P1 ist hierbei fluidtechnisch in einem Teil der Anordnung 2 angeordnet, der den Hauptbremszylinder 4 mit den Radbremszylindern des rechten Vorderrades VR und des linken Hinterrades HL verbindet. Mittels der Pumpe P1 kann hierbei ein Druck in diesem Teil der Anordnung 2 verändert werden. Die zweite Pumpe P2 ist in einem weiteren Teil der Anordnung 2 angeordnet, die den Hauptbremszylinder 4 mit den Radbremszylindern des linken Vorderrades VL und des rechten Hinterrades HR fluidtechnisch verbindet. Mittels der zweiten Pumpe P2 kann hierbei ein Druck in diesem weiteren Teil der Anordnung 2 verändert werden. Die Pumpen P1, P2 und der Servomotor M bilden hierbei eine Pumpeneinrichtung eines Schlupfregelsystems.

Der zweite Bremskreis umfasst die zweite Steuer- und Auswerteeinrichtung 19, die zweite Batterie 20, den Servomotor M, die erste und zweite Pumpe P1, P2, die Ventile 11, die Niederdruckspeicher 14, die Raddrehzahlsensoren 15 und den Drucksensor 13. Hierbei werden diese Elemente aus der zweiten Batterie 20 mit elektrischer Energie versorgt.

Der erste Bremskreis hingegen umfasst die erste Steuer- und Auswerteeinrichtung 17, die erste Batterie 18, den elektrischen Bremskraftverstärker 7 mit dem Hauptbremszylinder 4 und, wie vorhergehend erwähnt, den Rotorsensorwinkel 8 sowie den Kraftsensor 10. Diese Elemente werden aus der ersten Batterie 18 mit elektrischer Energie versorgt.

Im Normalbetrieb wird eine gewünschte Bremswirkung vom ersten Bremskreis erzeugt. Ein Einfachfehler im ersten Bremskreis kann z.B. auftreten, wenn eine Energieversorgung der Elemente des ersten Bremskreises aus der ersten Batterie 18 unterbrochen ist, ein Ausfall oder eine Fehlfunktion der ersten Steuer- und Auswerteeinrichtung 17 vorliegt, ein Ausfall des elektrischen Bremskraftverstärkers 7 vorliegt oder ein Ausfall des Rotorwinkelsensors 8 oder des Kraftsensors 10 vorliegt. In diesem Fall wird der erste Bremskreis deaktiviert und der zweite Bremskreis aktiviert. Hierbei erfolgt eine Bestimmung einer von einem Fahrzeugführer gewünschten Bremswirkung in Abhängigkeit eines Ausgangssignals des Drucksensors 13. In Abhängigkeit dieses Ausgangssignals kann hierbei bestimmt werden, mit welcher Betätigungskraft F_{brems} der Fahrzeugführer das Bremspedal 9 betätigt. In Abhängigkeit dieser Betätigungskraft F_{brems} kann ein Bremsdruckaufbau durch den von der zweiten Steuer- und Auswerteeinrichtung 19 gesteuerten Servomotor M erfolgen. Der Servomotor M und die Pumpen P1, P2 stellen hierbei drehzahlgeregelte Rückförderpumpen des Schlupfregelsystems des Fahrzeuges dar. In diesem Fall steht beim Betrieb des Bremssystems 1 eine Schlupfregelung zur Verfügung, da die Raddrehzahlsensoren 15 ebenfalls von der zweiten Batterie 20 mit Energie versorgt werden.

Ein Einfachfehler im zweiten Bremskreis kann beispielsweise auftreten, wenn eine Energieversorgung der Elemente des zweiten Bremskreises durch die zweite Batterie 20 unterbrochen wird, ein Ausfall oder eine Fehlfunktion der zweiten Steuer- und Auswerteeinrichtung 19 vorliegt, ein Ausfall der durch den Servomotor M und die Pumpen P1, P2 ausgebildeten Pumpeinrichtung vorliegt, ein Ausfall eines der Ventile 11 vorliegt oder ein Ausfall des Drucksensors 13 auftritt. In diesem Fall erfolgt eine Bestimmung einer gewünschten Bremswirkung in Abhängigkeit eines Ausgangssignals des Kraftsensors 10 und ein Bremsdruckaufbau durch den elektrischen Bremskraftverstärker 7. Leichte Defekte innerhalb des zweiten Bremskreises, z.B. ein Defekt eines elektromechanischen Ventils 11, können hierbei beispielsweise zu einer geordneten Degradierung von Funktionen, z.B. einer erzeugten Bremswirkung, innerhalb des von dem Servomotor M und den Pumpen P1, P2 gebildeten Schlupfregelsystems erfolgen. Jedoch wird, entsprechend einer Deaktivierung des ersten Bremskreises bei einem Einfachfehler im ersten Bremskreis, der zweite Bremskreis deaktiviert, falls einer der vorhergehend erläuterten Einfachfehler im zweiten Bremskreis vorliegt. Hierbei kann je nach Degradierung des zweiten Bremskreises gegebenenfalls keine elektronische Bremskraftverteilung mehr zur Verfügung stehen.

In einem fehlerfreien Zustand des Bremssystems erfolgt eine Erzeugung einer Bremswirkung in Abhängigkeit eines Bremswunsches des Fahrzeugführers durch den ersten Bremskreis, insbesondere durch den elektrischen Bremskraftverstärker 7. Eine Schlupfregelung erfolgt durch das vorgehend erläuterte Schlupfregelsystem.

Das in Fig. 1 dargestellte Bremssystem 1 kann mit geringem Aufwand aus käuflichen Teilen aufgebaut werden.

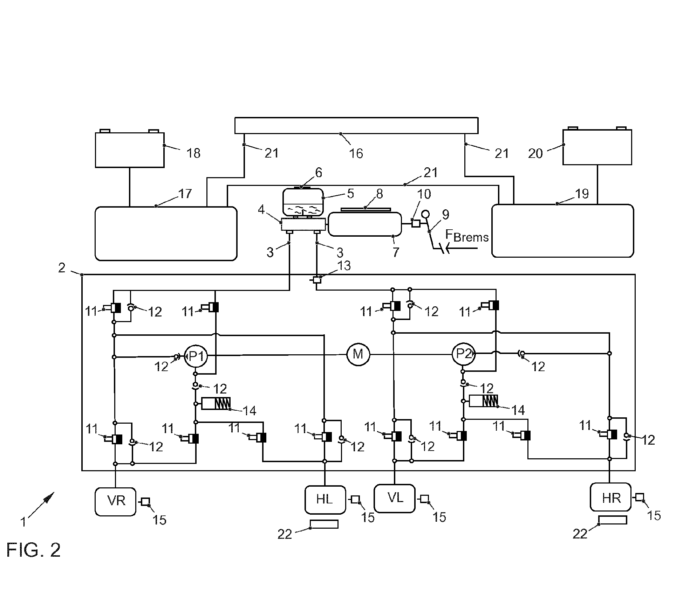

In Fig. 2 ist ein schematisches Blockschaltbild einer weiteren Ausführungsform des Bremssystems 1 dargestellt. Das in Fig. 2 dargestellte Bremssystem 1 ist hierbei entsprechend dem in Fig. 1 dargestellten Bremssystem 1 aufgebaut. Daher kann auf die entsprechenden Ausführungen zu Fig. 1 verwiesen werden. Im Unterschied zu dem in Fig. 1 dargestellten Bremssystem 1 umfasst das in Fig. 2 dargestellte Bremssystem 1 zwei elektrische Parkbremsen 22, wobei eine elektrische Parkbremse 22 dem linken Hinterrad HL und eine elektrische Parkbremse 22 dem rechten Hinterrad HR zugeordnet ist. Die elektrischen Parkbremsen 22 sind hierbei Elemente des ersten Bremskreises und werden aus der ersten Batterie 18 mit elektrischer Energie versorgt.

Nur die den Hinterrädern HL, HR zugeordneten elektromechanischen Einlassventile 11 sind zu stromlos geschlossene Ventilen geändert worden. Somit sind den Hinterrädern HL, HR zugeordnete Einlassventile 11 stromlos geschlossene Ventile, wobei alle elektromechanischen Ventile 11 weiterhin dem zweiten Bremskreis zugeordnet sind und aus der zweiten Batterie 20 mit Energie versorgt werden. Die einem Hinterrad HL, HR zugeordnete elektromechanische Ventile 11 sind hierbei diejenigen elektromechanischen Ventile 11 aus der Gruppe der in Fig. 2 dargestellten elektromechanischen Ventile 11, durch die ein Fluidstrom in den nicht dargestellten Radbremszylinder des jeweiligen Hinterrads HL, HR einstellbar ist.

In einem fehlerfreien Zustand des zweiten Bremskreises werden diese elektromechanischen Ventile 11 bei jeder Bremsung bestromt und können daher einen Fluidstrom in und aus den Hinterrädern HL, HR zugeordneten Radbremszylinder einstellen.

Im ersten Bremskreis können hierbei die in den Erläuterungen zu Fig. 1 beschriebenen Einfachfehler auftreten. Entsprechend dieser Ausführungen kann in einem solchen Fall eine Bestimmung einer gewünschten Bremswirkung in Abhängigkeit des Ausgangssignals des Drucksensors 13 erfolgen, wobei ein Bremsdruckaufbau durch den Servomotor M, der von der zweiten Steuer- und Auswerteeinrichtung 19 gesteuert wird, erfolgt. Hierbei steht eine Schlupfregelung zur Verfügung. Die Raddrehzahlsensoren 15 sind hierbei dem zweiten Bremskreis zugeordnet und werden aus der zweiten Batterie 20 mit elektrischer Energie versorgt.

Im zweiten Bremskreis kann einer der in den Erläuterungen zu Fig. 1 beschriebenen Einfachfehler auftreten. Entsprechend diesen Ausführungen kann in einem solchen Fall eine Bestimmung einer gewünschten Bremswirkung in Abhängigkeit eines Ausgangssignals des Kraftsensors 10 erfolgen, wobei ein Bremsdruckaufbau durch den elektrischen Bremskraftverstärker 7 erfolgt. In diesem Fall steht keine Schlupfregelung zur Verfügung. Da in diesem Fall der zweite Bremskreis deaktiviert wird, werden auch die den Hinterrädern HL, HR zugeordneten elektromechanischen Ventile 11 stromlos geschaltet, wodurch diese sich in einem geschlossenen Zustand befinden. Somit kann kein hydraulischer Fluidstrom in die den Hinterrädern HL, HR zugeordneten Radbremszylinder mittels der elektromechanischen Ventile 11 gesteuert werden. Eine Abbremsung der Hinterräder HR, HL erfolgt nun über die dem ersten Bremskreis zugeordneten elektrischen Parkbremsen 22. Hierbei kann als Vorsteuerung eine feste Bremskraftverteilung zwischen der in diesem Fall hydraulisch gebremsten Vorderrädern VR, VL und den durch die elektrischen Parkbremsen 22 gebremsten Hinterrädern HL, HR eingestellt werden, wodurch ein Überbremsen der Hinterräder HL, HR vermieden wird.

In einem fehlerfreien Zustand des Bremssystems 1 kann eine Erzeugung einer gewünschten Bremswirkung durch den aktiven Bremskraftverstärker 7 erfolgen.

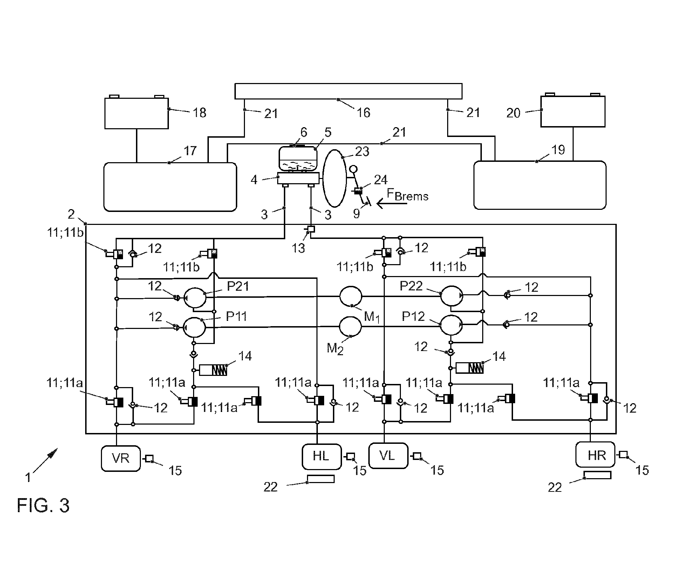

In Fig. 3 ist ein schematisches Blockschaltbild eines Bremssystems 1 in einer dritten Ausführungsform dargestellt. Das in Fig. 3 dargestellte Bremssystem 1 ist hierbei in weiten Teilen gleich dem in Fig. 1 dargestellten Bremssystem 1 aufgebaut. Im Unterschied zu dem in Fig. 1 dargestellten Bremssystem 1 umfasst das in Fig. 3 dargestellte Bremssystem 1 einen passiven Unterdruck-Bremskraftverstärker 23. Weiter umfasst das Bremssystem 1 ein erstes Schlupfregelsystem mit einem ersten Servomotor M1, der gleichzeitig Pumpen P11, P12 des ersten Schlupfregelsystems antreibt. Der erste Servomotor M1 ist hierbei ein drehzahlgeregelter Servomotor M1. Das erste Schlupfregelsystem ist hierbei dem ersten Bremskreis zugeordnet, wobei der erste Servomotor M1 von der ersten Batterie 18 mit elektrischer Energie versorgt wird. Entsprechend sind acht der in Fig. 3 dargestellten zwölf elektromechanischen Ventile 11, die als ABS-Ventile fungieren, dem ersten Bremskreis zugeordnet. Die acht ABS-Ventile sind hierbei mit dem Bezugszeichen 11a gekennzeichnet. Auch die Drehzahlsensoren 15 sind dem ersten Bremskreis zugeordnet.

Weiter umfasst das Bremssystem 1 ein zweites Schlupfregelsystem mit einem zweiten Servomotor M2 und Pumpen P21, P22 des zweiten Schlupfregelsystems. Der zweite Servomotor M2 ist hierbei dem zweiten Bremskreis zugeordnet und wird aus der zweiten Batterie 20 mit elektrischer Energie versorgt. Weiter umfasst der zweite Bremskreis elektrische Parkbremsen 22, die den Hinterrädern HR, HL zugeordnet sind. Hierbei steuert die erste Steuer- und Auswerteeinrichtung 17 den ersten Servomotor M1 und die ABS-Ventile 11a an. Die zweite Steuer- und Auswerteeinrichtung 19 steuert den zweiten Servomotor M2 und die elektrischen Parkbremsen 22 an, die jeweils einem Hinterrad HL, HR zugeordnet sind. In Fig. 3 ist dargestellt, dass ein Bremslichtschalter 24 sowie die als ESP-Trennventile 11b teilredundant ausgebildet sind. Auch der Drucksensor 13 kann teilredundant ausgebildet sein, dies ist jedoch nicht dargestellt. Somit weist z.B. der Drucksensor 13 und der Bremslichtschalter 24 jeweils zwei Ausgangskanäle auf, wobei ein Ausgangskanal mit der ersten Steuer- und Auswerteeinrichtung 17 und der zweite Ausgangskanal mit der zweiten Steuer- und Auswerteeinrichtung 19 verbunden ist. Die ESP-Trennventile 11 b weisen zwei Eingangskanäle auf, wobei ein erster Eingangskanal mit der ersten Steuer- und Auswerteeinrichtung 17 und ein zweiter Eingangskanal mit der zweiten Steuer- und Auswerteeinrichtung 19 verbunden ist.

Somit können die ESP-Trennventile 11 b sowohl durch die erste Steuer- und Auswerteeinrichtung 17 als auch durch die zweite Steuer- und Auswerteeinrichtung 19 angesteuert werden, wobei über eine Vorrangschaltung die Steuersignale der ersten Steuer- und Auswerteeinrichtung 17 Priorität haben. Entsprechend den Ausführungen zu Fig. 2 sind die den Hinterrädern zugeordneten elektromechanischen Ventile 11 stromlos geschlossene Ventile. In einem fehlerfreien Zustand des ersten Bremskreises des Bremssystems 1 werden diese elektromechanischen Ventile 11 während einer Bremsung bestromt. Die Servomotoren M1, M2 sowie die Pumpen P11, P12, P21, P22 können hierbei derart ausgelegt sein, dass die von ihnen gebildeten Schlupfregelsysteme jeweils eine gewünschte Betriebsbremswirkung erzeugen können und z.B. einen maximalen Bremsdruck von z.B. 200 bar aufbauen können. In einem fehlerfreien Zustand des Bremssystems 1 können die beiden Schlupfregelsysteme parallel arbeiten, wodurch eine hohe Dynamik von Druckänderungen ermöglicht wird.

Der erste Bremskreis kann die in den Erläuterungen zu Fig. 1 beschriebenen Einfachfehler aufweisen. In diesem Fall kann eine Bestimmung einer gewünschten Bremswirkung in Abhängigkeit eines durch den zweiten Ausgangskanal des Drucksensors 13 an die zweite Steuer- und Auswerteeinrichtung 19 übertragenen Ausgangssignals sowie in Abhängigkeit des durch den zweiten Ausgangskanal des Bremslichtschalters 24 an die zweite Steuer- und Auswerteeinrichtung 19 übertragenen Ausgangssignals erfolgen. In diesem Fall, z.B. bei einer Fremdbremsung, kann dann ein Druckaufbau durch den zweiten Servomotor M2 erfolgen. Da der erste Bremskreis in diesem Fall deaktiviert wird, werden auch die den Hinterrädern zugeordneten elektromechanischen Ventile 11 stromlos geschaltet und gehen somit in einen geschlossenen Zustand über. Daher können die Hinterräder HL, HR wie in Bezug auf Fig. 2 beschrieben nicht mehr hydraulisch gebremst werden. Die Abbremsung der Hinterräder HL, HR erfolgt nun über die elektrischen Parkbremsen 22, die dem zweiten Bremskreis zugeordnet sind. Wie zu Fig. 2 beschrieben, kann auch hier eine vorbestimmte Bremskraftverteilung eingestellt werden.

Bei einem Einfachfehler im zweiten Bremskreis, der in den Erläuterungen zu Fig. 1 bereits beschrieben wurde, kann eine Bestimmung einer gewünschten Bremswirkung entsprechend in Abhängigkeit der durch die ersten Ausgangskanäle des Drucksensors 13 und des Bremslichtschalters 24 an die erste Steuer- und Auswerteeinrichtung 17 übertragenen Ausgangssignale bestimmt werden. In diesem Fall, z.B. bei einer Fremdbremsung, kann ein Druckaufbau nunmehr durch den ersten Servomotor M1 erfolgen. Da dem ersten Bremskreis die Raddrehzahlsensoren 15 zugeordnet sind, steht in diesem Fall eine Schlupfregelung zur Verfügung.

### Bezugszeichenliste

- 1: Bremssystem
- 2: Anordnung
- 3: Bremsleitung
- 4: Hauptbremszylinder
- 5: Arbeitsspeicher
- 6: Füllstandssensor
- 7: elektrischer Bremskraftverstärker
- 8: Rotorwinkelsensor
- 9: Bremspedal
- 10: Kraftsensor
- 11: elektromechanisches Ventil
- 11a: ABS-Ventil
- 11b: ESP-Ventil
- 12: Rückschlagventil
- 13: Drucksensor
- 14: Niederdruckspeicher
- 15: Raddrehzahlsensor
- 16: Sensoren
- 17: erste Steuer- und Auswerteeinrichtung
- 18: erste Batterie
- 19: zweite Steuer- und Auswerteeinrichtung
- 20: zweite Batterie
- 21: CAN-Bus
- 22: elektrische Parkbremse
- 23: Vakuum-Bremskraftverstärker
- 24: Bremslichtschalter
- F_{brems}: Pedalkraft
- HR: rechtes Hinterrad
- HL: linkes Hinterrad
- VR: rechtes Vorderrad
- VL: linkes Vorderrad
- P1: Pumpe
- P2: Pumpe
- P11: Pumpe
- P12: Pumpe
- P21: Pumpe
- P22: Pumpe
- M: Servomotor
- M1: Servomotor
- M2: Servomotor

## Patentansprüche

1. Bremssystem eines Fahrzeugs, insbesondere eines teil-, hoch- oder vollautomatisch betreibbaren Fahrzeugs, wobei das Bremssystem (1) einen ersten Bremskreis und mindestens einen weiteren Bremskreis umfasst,
wobei der erste Bremskreis eine erste Druckerzeugungseinrichtung und der mindestens eine weitere Bremskreis eine weitere Druckerzeugungseinrichtung umfasst,
wobei das Bremssystem (1) eine erste Energiequelle und mindestens eine weitere Energiequelle umfasst,
wobei die erste Druckerzeugungseinrichtung aus der ersten Energiequelle versorgbar ist, wobei die weitere Druckerzeugungseinrichtung aus der weiteren Energiequelle versorgbar ist,
wobei ein Einfachfehler in dem ersten oder dem weiteren Bremskreis detektierbar ist, wobei ein fehlerhafter Bremskreis deaktivierbar und ein funktionsfähiger Bremskreis aktivierbar ist,
wobei
eine mittels der ersten Druckerzeugungseinrichtung erzeugbare Bremswirkung größer als eine oder gleich einer vorbestimmten Betriebsbremswirkung ist, wobei eine mittels der weiteren Druckerzeugungseinrichtung erzeugbare Bremswirkung größer als die oder gleich der vorbestimmten Betriebsbremswirkung ist,
**dadurch gekennzeichnet, dass**
in einem Normalbetrieb der erste Bremskreis betrieben wird und der weitere Bremskreis inaktiv ist oder in einem Normalbetrieb der weitere Bremskreis betrieben wird und der erste Bremskreis inaktiv ist, wobei das Bremssystem derart ausgebildet ist, dass von einem fehlerhaften Bremskreis auf einen funktionsfähigen Bremskreis umgeschaltet wird.

2. Bremssystem nach Anspruch 1, **dadurch gekennzeichnet, dass** der erste Bremskreis weiterhin eine erste Auswerte- und Steuereinrichtung (17) und mindestens einen dem ersten Bremskreis zugeordneten Sensor umfasst,
wobei der mindestens eine weitere Bremskreis weiterhin eine weitere Auswerte- und Steuereinrichtung (19) und mindestens einen dem weiteren Bremskreis zugeordneten Sensor umfasst,
wobei mittels der ersten Auswerte- und Steuereinrichtung (17) eine Erzeugung der Bremswirkung abhängig von einem Ausgangssignal des mindestens einen dem ersten Bremskreis zugeordneten Sensors und unabhängig von einem Ausgangssignal des mindestens einen dem weiteren Bremskreis zugeordneten Sensors steuerbar ist,
wobei mittels der weiteren Auswerte- und Steuereinrichtung (19) eine Erzeugung der Bremswirkung abhängig von einem Ausgangssignal des mindestens einen dem weiteren Bremskreis zugeordneten Sensors und unabhängig von einem Ausgangssignal des mindestens einen dem ersten Bremskreis zugeordneten Sensors steuerbar ist,
wobei die erste Steuer- und Auswerteeinrichtung (17) und der mindestens eine dem ersten Bremskreis zugeordnete Sensor aus der ersten Energiequelle versorgbar sind, wobei die weitere Steuer- und Auswerteeinrichtung (19) und der mindestens eine dem weiteren Bremskreis zugeordnete Sensor aus der weiteren Energiequelle versorgbar sind.

3. Bremssystem nach einem der vorangegangenen Ansprüche, **dadurch gekennzeichnet, dass** die erste Druckerzeugungseinrichtung als aktiver Bremskraftverstärker (7) oder als Pumpeinrichtung eines ersten Schlupfregelsystems ausgebildet ist.

4. Bremssystem nach einem der vorangegangenen Ansprüche, **dadurch gekennzeichnet, dass** die weitere Druckerzeugungseinrichtung als Pumpeinrichtung eines weiteren Schlupfregelsystems ausgebildet ist.

5. Bremssystem nach einem der vorangegangenen Ansprüche, **dadurch gekennzeichnet, dass** entweder der erste Bremskreis oder der weitere Bremskreis zusätzlich mindestens eine elektromechanische Bremseinrichtung umfasst, wobei die elektromechanische Bremseinrichtung einem drehbaren Rad des Fahrzeugs zugeordnet ist, wobei die elektromechanische Bremseinrichtung aktivierbar ist, falls der entsprechende Bremskreis aktiviert wird.

6. Bremssystem nach Anspruch 5, **dadurch gekennzeichnet, dass** das Bremssystem mindestens ein elektromechanisches Ventil (11, 11a) umfasst, wobei mittels des elektromechanischen Ventils (11, 11a) ein Fluidstrom in einen Radbremszylinder eines drehbaren Rades einstellbar ist, wobei diesem drehbaren Rad auch die mindestens eine elektromechanische Bremseinrichtung zugeordnet ist, wobei das elektromechanische Einlassventil ein stromlos geschlossenes Einlassventil ist.

7. Bremssystem nach einem der vorangegangenen Ansprüche, **dadurch gekennzeichnet, dass** mindestens ein Sensor und/oder mindestens ein Aktor, der sowohl dem ersten als auch dem weiteren Bremskreis zugeordnet sind, teilredundant aufgebaut sind.

8. Bremssystem nach einem der vorangegangenen Ansprüche, **dadurch gekennzeichnet, dass** das Bremssystem eine Einrichtung zur Erzeugung einer Pedalgegenkraft umfasst.

9. Bremssystem nach einem der vorangegangen Ansprüche, **dadurch gekennzeichnet, dass** das Bremssystem (1) mindestens einen Niederdruckspeicher (14) umfasst, wobei der Niederdruckspeicher (14) derart dimensioniert ist, dass zusätzlich zu einer Aufnahme eines Betriebsmittels des Bremssystems (1) bei einem Druckabbau in mindestens einem Radbremszylinder auch eine Aufnahme von dem Betriebsmittel bei einem rekuperativen Bremsen möglich ist.

10. Verfahren zur Erzeugung einer Bremskraft in einem Fahrzeug, insbesondere in einem teil-, hoch- oder vollautomatisch betreibbaren Fahrzeug,
wobei im Normalbetrieb eine erste Druckerzeugungseinrichtung eines ersten Bremskreises, die aus einer ersten Energiequelle versorgt wird, derart angesteuert wird, dass eine gewünschte Bremswirkung erzeugt wird,
wobei eine Funktionsfähigkeit des ersten Bremskreises überwacht wird,
wobei im Falle eines Einfachfehlers im ersten Bremskreis mindestens eine weitere Druckerzeugungseinrichtung eines weiteren Bremskreises, die aus einer weiteren Energiequelle versorgt wird, derart angesteuert wird, dass eine Bremswirkung erzeugt wird,
wobei
eine im Falle eines Einfachfehlers im weiteren Bremskreis erzeugte oder erzeugbare Bremswirkung in allen fahrdynamischen Zuständen gleich der oder größer als die gewünschte Bremswirkung ist,
**dadurch gekennzeichnet, dass**
in einem Normalbetrieb der erste Bremskreis betrieben wird und der weitere Bremskreis inaktiv ist oder in einem Normalbetrieb der weitere Bremskreis betrieben wird und der erste Bremskreis inaktiv ist, wobei das Bremssystem derart ausgebildet ist, dass von einem fehlerhaften Bremskreis auf einen funktionsfähigen Bremskreis umgeschaltet wird.

## Claims

1. Brake system of a vehicle, in particular of a vehicle which can be operated partially automatically, mainly automatically or fully automatically, wherein the brake system (1) comprises a first brake circuit and at least one further brake circuit,
wherein the first brake circuit comprises a first pressure-generating device, and the at least one further brake circuit comprises a further pressure-generating device,
wherein the brake system (1) comprises a first energy source and at least one further energy source,
wherein the first pressure-generating device can be supplied from the first energy source, wherein the further pressure-generating device can be supplied from the further energy source,
wherein a simple fault in the first or the further brake circuit can be detected, wherein a faulty brake circuit can be deactivated and the functionally capable brake circuit can be activated,
wherein a braking effect which can be generated by means of the first pressure-generating device is greater or equal to a predetermined braking service braking effect, wherein a braking effect which can be generated by means of the further pressure-generating device is greater than or equal to the predetermined service brake effect,
**characterized in that**
in a normal operating mode the first brake circuit is operated and the further brake circuit is inactive, or in a normal operating mode the further brake circuit is operated and the first brake circuit is inactive, wherein the brake circuit is embodied in such a way that switching over from a faulty brake circuit to a functionally capable brake circuit is carried out.

2. Brake system according to Claim 1, **characterized in that** the first brake circuit also comprises a first evaluation and control device (17) and at least one sensor which is assigned to the first brake circuit,
wherein the at least one further brake circuit also comprises a further evaluation and control device (19) and at least one sensor which is assigned to the further brake circuit,
wherein, by means of the first evaluation and control device (17), generation of the braking effect can be controlled as a function of an output signal of the at least one sensor which is assigned to the first brake circuit and as a function of an output signal of the at least one sensor which is assigned to the further brake circuit, wherein, by means of the further evaluation and control device (19), a generation of the braking effect can be controlled as a function of an output signal of the at least one sensor which is assigned to the further brake circuit and independently of an output signal of the at least one sensor which is assigned to the first brake circuit, wherein the first control and evaluation device (17) and the at least one sensor which is assigned to the first brake circuit can be supplied from the first energy source, wherein the further control and evaluation device (19) and the at least one sensor which is assigned to the further brake circuit can be supplied from the further energy source.

3. Brake system according to one of the preceding claims, **characterized in that** the first pressure-generating device is embodied as an active brake booster (7) or as a pumping device of a first traction control system.

4. Brake system according to one of the preceding claims, **characterized in that** the further pressure-generating device is embodied as a pumping device of a further traction control system.

5. Brake system according to one of the preceding claims, **characterized in that** either the first brake circuit or the further brake circuit additionally comprises at least one electromechanical brake device, wherein the electromechanical brake device is assigned to a rotatable wheel of the vehicle, wherein the electromechanical braking device can be activated if the corresponding brake circuit is activated.

6. Brake system according to Claim 5, **characterized in that** the brake system comprises at least one electromechanical valve (11, 11a) wherein a fluid stream into a wheel brake cylinder of a rotatable wheel can be set by means of the electromechanical valve (11, 11a), wherein the at least one electromechanical brake device is also assigned to this rotatable wheel, wherein the electromechanical inlet valve is an inlet valve which is closed in a currentless state.

7. Brake system according to one of the preceding claims, **characterized in that** at least one sensor and/or at least one actuator, which are assigned both to the first and to the further brake circuit, are of partially redundant design.

8. Brake circuit according to one of the preceding claims, **characterized in that** the brake system comprises a device for generating a pedal-opposing force.

9. Brake system according to one of the preceding claims, **characterized in that** the brake system (1) comprises at least one low-pressure accumulator (14), wherein the low-pressure accumulator (14) is dimensioned in such a way that, in addition to accommodating an operating medium of the brake system (1) in the event of a reduction in pressure in at least one wheel brake cylinder, it is also possible to accommodate the braking medium in the case of recuperative braking.

10. Method for generating a braking force in a vehicle, in particular in a vehicle which can be operated partially automatically, mainly automatically or fully automatically,
wherein in the normal operating mode a first pressure-generating device for the first brake circuit, which pressure-generating device is supplied from a first energy source, is actuated in such a way that a desired braking effect is generated,
wherein a functional capability of the first brake circuit is monitored,
wherein in the event of a simple error in the first brake circuit at least one further pressure-generating device of a further brake circuit, which pressure-generating device is supplied from a further energy source, is actuated in such a way that a braking effect is generated,
wherein a braking effect which is generated or can be generated in the event of a simple error in the further brake circuit is equal to or greater than the desired braking effect in all states of vehicle movement dynamics,
**characterized in that**
in a normal operating mode the first brake circuit is operated and the further brake circuit is inactive, or in a normal operating mode the further brake circuit is operated and the first brake circuit is inactive, wherein the brake system is embodied in such a way that switching over from a faulty brake circuit to a functionally capable brake circuit is carried out.

## Revendications

1. Système de freinage d'un véhicule, en particulier d'un véhicule à commande partiellement, principalement ou complètement automatique, le système de freinage (1) comprenant un premier circuit de freinage et au moins un circuit de freinage supplémentaire,
le premier circuit de freinage comprenant un premier dispositif de génération de pression et l'au moins un circuit de freinage supplémentaire comprenant un dispositif de génération de pression supplémentaire,
le système de freinage (1) comprenant une première source d'énergie et au moins une source d'énergie supplémentaire,
le premier dispositif de génération de pression pouvant être alimenté à partir de la première source d'énergie,
le dispositif de génération de pression supplémentaire pouvant être alimenté à partir de la source d'énergie supplémentaire,
une erreur simple dans le premier circuit de freinage ou le circuit de freinage supplémentaire pouvant être détectée,
un circuit de freinage défectueux pouvant être désactivé et un circuit de freinage fonctionnel pouvant être activé,
un effet de freinage pouvant être généré au moyen du premier dispositif de génération de pression étant identique à ou plus important qu'un effet de freinage de service prédéterminé, un effet de freinage pouvant être généré au moyen du dispositif de génération de pression supplémentaire étant identique à ou plus important que l'effet de freinage de service prédéterminé, **caractérisé en ce que**
pendant le fonctionnement normal, le premier circuit de freinage est utilisé et le circuit de freinage supplémentaire est inactif ou pendant un fonctionnement normal, le circuit de freinage supplémentaire est activé et le premier circuit de freinage est inactif, le système de freinage étant réalisé de manière à commuter d'un circuit de freinage défaillant à un circuit de freinage fonctionnel.

2. Système de freinage selon la revendication 1, **caractérisé en ce que** le premier circuit de freinage comprend en outre un premier dispositif d'analyse et de commande (17) et au moins un capteur associé au premier circuit de freinage,
l'au moins un circuit de freinage supplémentaire comprenant en outre un dispositif d'analyse et de commande supplémentaire (19) et au moins un capteur associé au circuit de freinage supplémentaire,
une génération de l'effet de freinage pouvant être commandée en fonction d'un signal de sortie de l'au moins un capteur associé au premier circuit de freinage et indépendamment d'un signal de sortie de l'au moins un capteur associé au circuit de freinage supplémentaire au moyen du premier dispositif d'analyse et de commande (17),
une génération de l'effet de freinage pouvant être commandée en fonction d'un signal de sortie de l'au moins un capteur associé au circuit de freinage supplémentaire et indépendamment d'un signal de sortie de l'au moins un capteur associé au premier circuit de freinage au moyen du dispositif d'analyse et de commande supplémentaire (19),
le premier dispositif de commande et d'analyse (17) et l'au moins un capteur associé au premier circuit de freinage pouvant être alimentés à partir de la première source d'énergie,
le dispositif de commande et d'analyse supplémentaire (19) et l'au moins un capteur associé au circuit de freinage supplémentaire pouvant être alimentés à partir de la source d'énergie supplémentaire.

3. Système de freinage selon l'une quelconque des revendications précédentes, **caractérisé en ce que** le premier dispositif de génération de pression est réalisé sous forme de servofrein actif (7) ou sous forme de dispositif de pompage d'un premier système d'antipatinage.

4. Système de freinage selon l'une quelconque des revendications précédentes, **caractérisé en ce que** le dispositif de génération de pression supplémentaire est réalisé sous forme de dispositif de pompage d'un système d'antipatinage supplémentaire.

5. Système de freinage selon l'une quelconque des revendications précédentes, **caractérisé en ce que** soit le premier système de freinage soit le système de freinage supplémentaire comprend en outre au moins un dispositif de freinage électromécanique, le dispositif de freinage électromécanique ayant été associé à une roue rotative du véhicule, le dispositif de freinage électromécanique pouvant être activé si le circuit de freinage correspondant est activé.

6. Système de freinage selon la revendication 5, **caractérisé en ce que** le système de freinage comprend au moins une soupape électromécanique (11, 11a), un courant de fluide pouvant être ajusté dans un cylindre de frein de roue d'une roue rotative au moyen de la soupape électromécanique (11, 11a), l'au moins un dispositif de freinage électromécanique étant également associé à cette roue rotative, la soupape d'admission électromécanique étant une soupape d'admission fermée en l'absence de courant.

7. Système de freinage selon l'une quelconque des revendications précédentes, **caractérisé en ce qu'**au moins un capteur et/ou au moins un actionneur, lesquels sont associés à la fois au premier système de freinage et au système de freinage supplémentaire, sont réalisés de manière partiellement redondante.

8. Système de freinage selon l'une quelconque des revendications précédentes, **caractérisé en ce que** le système de freinage comprend un dispositif de génération d'une force de contre-réaction de pédale.

9. Système de freinage selon l'une quelconque des revendications précédentes, **caractérisé en ce que** le système de freinage (1) comprend au moins un accumulateur basse pression (14), l'accumulateur basse pression (14) étant dimensionné de telle sorte qu'en plus d'une récupération d'un fluide de service du système de freinage (1) en cas de diminution de pression dans au moins un cylindre de frein de roue, une récupération du fluide de service dans le cas d'un freinage récupératif soit également possible.

10. Procédé de génération d'une force de freinage dans un véhicule, en particulier dans un véhicule à commande partiellement, principalement ou complètement automatique,
un premier dispositif de génération de pression d'un premier circuit de freinage, qui est alimenté à partir d'une première source d'énergie, étant commandé pendant le fonctionnement normal de telle sorte qu'un effet de freinage souhaité soit généré,
une fonctionnalité du premier circuit de freinage étant surveillée,
en cas d'erreur simple dans le premier circuit de freinage, au moins un dispositif de génération de pression supplémentaire d'un circuit de freinage supplémentaire, qui est alimenté à partir d'une source d'énergie supplémentaire, étant commandé de telle sorte qu'un effet de freinage soit généré, un effet de freinage généré ou pouvant être généré dans le circuit de freinage supplémentaire en cas d'erreur simple, dans tous les états dynamiques de conduite, étant égal ou supérieur à l'effet de freinage souhaité,
**caractérisé en ce que**
pendant le fonctionnement normal, le premier circuit de freinage est utilisé et le circuit de freinage supplémentaire est inactif ou pendant un fonctionnement normal, le circuit de freinage supplémentaire est utilisé et le premier circuit de freinage est inactif, le système de freinage étant réalisé de manière à commuter d'un circuit de freinage défaillant à un circuit de freinage fonctionnel.
